# EUROPÄISCHE PATENTSCHRIFT

(11) **EP 0 719 807 B1**
(45) Veröffentlichungstag und Bekanntmachung des Hinweises auf die Patenterteilung: **03.11.1999**
(21) Anmeldenummer: 95119919.9
(22) Anmeldetag: 16.12.1995
(51) Int. Cl.: C08G 18/38, C08K 3/00, C08K 5/00, C08K 3/32, C08J 9/00

(54) **Verfahren zur Herstellung von flammgeschützten Hartschaumstoffen auf Isocyanatbasis**
Process for the preparation of flame-proofed rigid foams based on isocyanate
Procédé de préparation de mousses rigides ignifuges à base d'isocyanate

(30) Priorität: 27.12.1994 DE 4446847
(43) Veröffentlichungstag der Anmeldung: 03.07.1996
(73) Patentinhaber: BASF SCHWARZHEIDE GmbH, 01986 Schwarzheide (DE)
(72) Erfinder: Keppeler, Uwe, Dr., D-67126 Hochdorf-Assenheim (DE); Hinz, Werner, Dr., Wyandotte, MI 48192 (US); Reichelt, Michael, D-01945 Ruhland (DE)
(74) Vertreter: Karg, Jochen

(56) Entgegenhaltungen:
- EP-A- 0 158 165
- EP-A- 0 255 381
- FR-A- 1 388 667
- US-A- 3 423 343
- US-A- 3 509 076
- US-A- 3 943 077

## Beschreibung

Die Erfindung betrifft ein Verfahren zur Herstellung von flammgeschützten Hartschaumstoffen auf Isocyanatbasis, insbesondere Polyurethan- und Polyisocyanurathartschäumen, durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren,
f) einer speziellen Flammschutzmittelkombination sowie gegebenenfalls
g) weiteren Hilfsmitteln und/oder Zusatzstoffen.

Flammgeschützte Hartschaumstoffe auf Isocyanatbasis, insbesondere Polyurethan- und Polyisocyanurathartschäume, sind seit langem bekannt und werden vorwiegend im Bauwesen zu Dämmzwecken eingesetzt. Halogenfreie Formulierungen für flammgeschützte Hartschaumstoffe auf Isocyanatbasis sind aus DE-A-4003718, DE-A-4109076, DE-A-4222519 und EP-B-0463493 bekannt. Diese Formulierungen enthalten als Flammschutzmittel Phosphorsäureester, wie z.B. Diphenylkresylphosphat und Triethylposphat, oder Phosphonsäureester, wie z.B. Diethylethylphosphonat und Dimethylmethylphosphonat, in größeren Mengen. Diese Flammschutzmittel wirken sich negativ auf die mechanischen Festigkeiten und das Alterungsverhalten aus. Halogenfreie Formulierungen flammgeschützter Hartschaumstoffe auf Isocyanatbasis sind weiterhin in DE-A-4020283 beschrieben, wobei roter Phosphor als Flammschutzmittel verwendet wird. Roter Phosphor neigt zur Entzündung, insbesondere beim Auftreten von Reibungswärme an mechanisch bewegten Teilen, wie sie z.B. an Polyurethanverarbeitungsanlagen vorkommt. Daher bestehen sicherheitstechnische Bedenken gegen die Verwendung von rotem Phosphor.

Der vorliegenden Erfindung lag die Aufgabe zugrunde, flammgeschützte Hartschaumstoffe auf Isocyanatbasis bei Verwendung halogenfreier Flammschutzmittel aufzuzeigen, bei denen die Nachteile des Standes der Technik weitgehend vermieden und mechanischen und physikalischen Eigenschaften nicht negativ beeinflußt werden, ohne daß das Brandverhalten verschlechtert wird.

Diese Aufgabe wurde erfindungsgemäß dadurch gelöst, daß zur Flammfestmachung von Hartschaumstoffen auf Isocyanatbasis eine Kombination aus flüssigen, gegenüber Isocyanaten reaktiven Flammschutzmitteln und aus festen Flammschutzmitteln verwendet wird.

Gegenstand der Erfindung ist demzufolge ein Verfahren zur Herstellung von flammgeschützten Hartschaumstoffen auf Isocyanatbasis, insbesondere Polyurethan- und Polyisocyanurathartschäumen, durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren,
f) Flammschutzmitteln sowie gegebenenfalls
g) weiteren Hilfsmitteln und/oder Zusatzstoffen,
dadurch gekennzeichnet, daß als Flammschutzmittel eine Kombination aus mindestens einem flüssigen, gegenüber Isocyanaten reaktiven Flammschutzmittel und aus mindestens einem festen Flammschutzmittel eingesetzt wird.

Es war überraschend und in keiner Weise vorhersehbar, daß bei Verwendung dieser erfindungsgemäßen Flammschutzmittelkombination, besonders bei der Mitverwendung von leicht entzündlichen aliphatischen und cycloaliphatischen Treibmitteln, Hartschaumstoffe auf Isocyanatbasis hergestellt weden können, die das für den Einsatz im Bauwesen gewünschte Brandverhalten aufweisen, ohne daß dabei die mechanischen und wichtigen verarbeitungs- und anwendungstechnischen Eigenschaften der Schaumstoffe negativ beeinflußt werden. Die Schaumstoffe sind halogenfrei; nicht reaktive, flüssige Flammschutzmittel, wie sie üblicherweise verwendet werden, werden nicht benötigt oder können in ihrer Einsatzmenge sehr gering gehalten werden.

Für die erfindungsgemäße Flammfestausrüstung eignen sich prinzipiell alle an sich bekannten Hartschaumstoffe auf Isocyanatbasis, die nach den an sich üblichen Verfahren hergestellt werden können. Besonders vorteilhafte Ergebnisse haben sich bei Polyurethan- und Isocyanurathartschaumstoffen ergeben.

Zur Herstellung der Hartschaumstoffe auf Isocyanatbasis nach dem erfindungsgemäßen Verfahren finden, mit Ausnahme der Flammschutzmittel (f), die an sich bekannten Aufbaukomponenten Verwendung, zu denen im eizelnen folgendes auszuführen ist.
a) Als organische und/oder modifizierte organische Polyisocyanate (a) kommen die an sich bekannten aliphatischen, cycloaliphatischen, araliphatischen und vorzugsweise die aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, l-Isocyanato-3,3,5-trimethyl-5-isocyanatomethyl-cyclohexan (Isophoron-diisocyanat), 2,4- und 2,6-Hexahydrotoluylendiisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.
   Besonders bewährt als Isocyanate haben sich Diphenylmethandiisocyanat-Isomerengemische oder Roh-MDI und insbesondere Roh-MDI mit einem Diphenylmethan-diisocyanat-Isomerengehalt von 33 bis 55 Gew.-% sowie urethangruppenhaltige Polyisocyanatgemische auf Basis von Diphenylmethan-diisocyanat mit einem NCO-Gehalt von 15 bis 33 Gew.-%.
b) Als höhermolekulare Verbindungen mit mindestens zwei reaktiven Wasserstoffatomen (b) kommen Verbindungen in Frage, die zwei oder mehrere reaktive Gruppen, ausgewählt aus OH-Gruppen, SH-Gruppen, NH-Gruppen, NH₂-Gruppen und CH-aciden Gruppen, im Molekül tragen.
   Es werden zweckmäßigerweise solche mit einer Funktionalität von 2 bis 8, vorzugsweise 3 bis 8, und einem mittleren Molekulargewicht von 400 bis 8000, vorzugsweise von 400 bis 2000 verwendet. Bewährt haben sich z.B. Polyether-polyamine und/ oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Der Hydroxylzahl der Polyhydroxylverbindungen beträgt dabei in aller Regel 150 bis 850 und vorzugsweise 200 bis 600.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/ oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3, und ein Molekulargewicht von 150 bis 3000, vorzugsweise 150 bis 2000.
   Insbesondere als Polyole verwendet werden jedoch Polyether-polyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 400 bis 8000, vorzugsweise 1200 bis 6000 und insbesondere 1800 bis 4000 und geeignete Polyoxytetramethylen-glykole ein Molekulargewicht bis ungefähr 3500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
   Weiterhin können Polyole verwendet werden, bei denen die Hydroxylgruppen zumindest teilweise durch CH-acide Gruppen ausgetauscht sind.
c) Die Hartschaumstoffe auf Isocyanatbasis können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethan-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der höhermolekularen Verbindungen (b), zum Einsatz.
d) Zu Treibmitteln (d), welche zur Herstellung der Hartschaumstoffe verwendet werden können, gehören beispielsweise Wasser, das mit Isocyanatgruppen unter Bildung von Kohlendioxid reagiert, und/oder physikalisch wirkende Treibmittel. Geeignet sind Flüssigkeiten, welche gegenüber den organischen, gegebenenfalls modifizierten Polyisocyanaten inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.
   Vorzugsweise in Betracht kommen Wasser, Tertiärbutanol, Carbonsäuren, insbesondere Ameisensäure, niedrigsiedende Flüssigkeiten, wie Ether, Ester, Ketone und Kohlenwasserstoffe, insbesondere n-Pentan, iso-Pentan, Cyclopentan und 2,2-Dimethylpropan.
e) Als Katalysatoren (e) zur Herstellung der Hartschaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bicyclo-(2,2,2)-octan, und Alkanolaminverbindungen, wie Triethanolamin,Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumsalze, wie z.B. N,N,N-Trimethyl-N-2-hydroxypropyl-formiat, N,N,N-Trimethyl-N-2-hydroxypropyl-2-ethylhexanoat, Tetraalkylammoniumhydroxide, wie Tetramethylammoniumhydroxid, Alkalihydroxide, wie Natriumhydroxid, und Alkalialkoholate, wie Natriummethylat und Kaliumisopropylat, sowie Alkalisalze von langkettigen Fettsäuren mit 4 bis 20 C-Atomen und gegebenenfalls seitenständigen OH-Gruppen.
   Vorzugsweise werden tertiäre Amine, Zinn- und Bismutumverbindungen, Alkali- und Erdalkalicarboxylate, quaternäre Ammoniumsalze, s-Hexahydrotriazine und Tris- (dialkylaminomethyl)-phenole eingesetzt.
   Es werden vorzugsweise 0,001 bis 5 Gew.-%, insbesondere 0,05 bis 2 Gew.-%, Katalysator bzw. Katalysatorkombination, bezogen auf das Gewicht der Komponente (b) verwendet.
f) Erfindungsgemäß wird als Flammschutzmittel (f) eine Kombination aus mindestens einem flüssigen, gegenüber Isocyanaten reaktiven Flammschutzmittel und aus mindestens einem festen Flammschutzmittel eingesetzt.
   Als flüssige, gegenüber Isocyanaten reaktive Flammschutzmittel, die einen Bestandteil der erfindungsgemäßen Kombination bilden, kommen dabei Verbindungen mit mindestens einem gegenüber Isocyanaten reaktiven Wasserstofftom, die eine oder mehrere reaktive Gruppen, ausgewählt aus OH-Gruppen, SH-Gruppen, NH-Gruppen, NH₂-Gruppen und CH-aciden Gruppen, wie beispielsweise β-Diketo-Gruppen, im Molekül tragen und eine den Flammschutz unterstützende Wirkung zeigen, in Frage. Hierfür sind P- und/oder N-haltige Verbindungen besonders geeignet. Beispielhaft seien genannt: Veresterungsprodukte aus Phosphorsäure oder phosphoriger Säure mit Glykolen, wie z.B. Tris-(2-hydroxypropyl)-phosphat, Tris-(5-hydroxy-3-oxapentyl)- phosphat, Tris-(5-hydroxy-2,5-dimethyl-3-oxapentyl)-phosphat, Tris-(2-hydroxypropyl)-phosphit, Tris-(5-hydroxy-3-oxapentyl)-phosphit, Tris-(5-hydroxy--2,5-dimethyl-3-oxapentyl)-phosphit, Pentakis (dipropylenglykol)-diphosphat, Heptakis(dipropylenglykol)-triphosphat, Pentakis(dipropylenglykol)-diphosphit, Heptakis(dipropylenglykol)-triphosphit, aminomethylierte Phosphonsäureester, wie z.B. N,N-bis-(2-hydroxyethyl)aminomethan-phosphonsäure-diethylester, N,N-bis-(2-hydroxy-propyl)aminomethan-phosphonsäure-diethylester, N,N-bis-(2-hydroxypropyl)aminomethanphosphonsäure-diisopropylylester, Alkoxylierungsprodukte von Phosphorsäure, phosphorigerSäure, Polyphosphorsäuren, Mono- und Dialkylestern der Phosphorsäure, Mono- und Dialkylestern der phosphorigen Säure, wobei als Alkoxylierungsmittel vorzugsweise Ethylenoxid und/oder Propylenoxid und/oder Butylenoxid verwendet und vorzugsweise zwischen 1 und 20 Alkylenoxideinheiten addiert werden. Als flüssige, gegenüber Isocyanaten reaktive Flammschutzmittel können weiterhin Melaminderivate, wie beispielsweise N,N',N"-Tris(2-hydroxyethyl)-melamin, N,N',N"-Tris (2-hydroxypropyl)melamin und N,N',N"-Tris(5-hydroxy-3-oxapentyl)melamin verwendet werden.
   Als Harnstoffderivat sei beispielhaft N,N'-Di(methyloxy-2-hydroxyethyl) harnstoff genannt.
   Bevorzugt verwendet werden aminomethylierte Phosphonsäureester, wie z.B. N,N- bis-(2-hydroxyethyl)aminomethan-phosphonsäure-diethylester, N,N-bis-(2-hydroxypropyl)aminomethanphosphonsäure-diethylester und N,N-bis- (2-hydroxypropyl)-aminomethan-phosphonsäure-diisopropylylester.
   Die oben beispielhaft aufgeführten, flüssigen, gegenüber Isocyanaten reaktiven Flammschutzmittel können einzeln oder im Gemisch verwendet werden. Der flüssige Zustand von festen, reaktiven Flammschutzmitteln kann durch Lösen in flüssigen, gegenüber Isocyanaten reaktiven Flammschutzmitteln hergestellt werden.
   Als feste Flammschutzmittel, die einen Bestandteil der erfindungsgemäßen Kombination bilden, kommen Stoffe in Frage, die in der erfindungsgemäßen Kombination eine den Flammschutz unterstützende bzw. fördernde Wirkung aufweisen. Bevorzugt sind pulverförmige Stoffe, die eine Teilchengröße von unter 0,1 mm und besonders unter 0,04 mm aufweisen. Beispielhaft seien genannt: Ammoniumphosphat, Diammoniumhydrogenphosphat, Ammoniumdihydrogenphosphat, Ammoniumpolyphosphat, Phospham, Melamin, Melamincyanurat, Melaminphosphat, Melaminpyrophosphat, Melaminborat, Melaminbarbiturat, Tris(hydroxyethyl)cyanurat, Aluminiumoxidtrihydrat, Magnesiumhydroxid, Graphit, Blähgraphit, Calcium-, Barium- und Zinkborat, Zinkhydroxystannat, natürliche und modifizierte Stärken, Zellulose, Lignin, Zeolithe, Bentonit, Guanidincarbonat, Guanidinbarbiturat, Magnesiumcarbonat, Hydromagnesit, Huntit. Die pulverförmigen Flammschutzmittel können auch mit Oberflächenbeschichtungen modifiziert sein. Die oben genannten festen Flammschutzmittel können einzeln oder im Gemisch verwendet werden.
   Das Verhältnis der flüssigen, gegenüber Isocyanaten reaktiven Flammschutzmittel zu den festen Flammschutzmitteln beträgt 5:1 bis 1:5, vorzugsweise 2:1 bis 1:2.
   Der Gehalt der Kombination aus flüssigen, gegenüber Isocyanaten reaktiven Flammschutzmitteln und festen Flammschutzmitteln, bezogen auf das Gesamtgewicht des Systems, beträgt dabei 10 bis 45 Gew.-%, vorzugsweise 20 bis 35 Gew.-%.
   Erfindungsgemäß wird zur Flammfestmachung der Hartschaumstoffe auf Isocyanatbasis vorzugsweise ausschließlich die beschriebene Kombination aus flüssigen, gegenüber Isocyanaten reaktiven Flammschutzmitteln und festen Flammschutzmitteln eingesetzt. Natürlich können in geringen Anteilen auch flüssige, nichtreaktive Flammschutzmittel mitverwendet werden. Vorzugsweise würde aber der gleiche Effekt durch Erhöhung der erfindungsgemäßen Bestandteile erreicht.
   Als gegebenenfalls zusätzlich einsetzbare Flammschutzmittel kommen nichtreaktive, additive, flüssige Flammschutzmittel in Betracht, vorzugsweise die an sich bekannten Alkyl-, Aryl- und Aralkylester der Phosphorsäure, der Phosphonsäure und der phosphorigen Säure. Beispielhaft seien genannt: Dimethylmethylphosphonat, Diethylethylphosphonat, Triethylphosphat, Tributylphosphat, Tributoxyethylphosphat, Triphenylphosphat, Diphenylkresylphosphat,Trikresylphosphat, Resorcinol-bis-diphenylphosphat und Triphenylphosphit.
   Der Gehalt der mitverwendeten flüssigen, nichtreaktiven Flammschutzmittel beträgt, bezogen auf das Gesamtsystem, höchstens 3 Gew.-%.
   Die erfindungsgemäß eingesetzte Flammschutzmittelkombination ist halogenfrei.
g) Der Reaktionsmischung zur Herstellung der Hartschaumstoffe auf Isocyanatbasis können gegebenenfalls weitere Hilfsmittel und/oder Zusatzstoffe (g) einverleibt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, insbesondere solche auf Silikonbasis, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Neben den festen Flammschutzmitteln können noch Füllstoffe eingesetzt werden, die keine oder nur eine untergeordnete Verbesserung des Brandverhaltens bewirken.
   Als Füllstoffe, insbesondere verstärkend wirkende Füllstoffe, sind die an sich bekannten, üblichen organischen und anorganischen Füllstoffe, Verstärkungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-,-Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 30 Gew.%, vorzugsweise 1 bis 15 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.

Nähere Angaben über oben genannte und weitere Ausgangsstoffe sind der Fachliteratur, beispielsweise der Monographie von J. H. Saunders und-K. C. Frisch "High Polymers" Band XVI, Polyurethanes Teil 1 und 2, Verlag Interscience Publishers 1962 bzw. 1964 oder dem Kunststoffhandbuch, Polyurethane, Band VII.Carl-Hanser- Verlag, München, Wien, 1., 2. und 3. Auflage, 1966, 1983 und 1993 zu entnehmen.

Zur Herstellung der Hartschaumstoffe auf Isocyanatbasis werden die organischen und/oder modifizierten organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,25:1, vorzugsweise 0,95 bis 1,15:1 und insbesondere 1 bis 1,05:1, beträgt.Falls die Hartschaumstoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1 angewandt.

Die Hartschaumstoffe auf Isocyanatbasis werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Als besonders vorteilhaft hat es sich erwiesen, nach dem Zweikomponenten-Verfahren zu arbeiten und die Aufbaukomponenten (b), (d), (e), (f) und gegebenenfalls (c) und (g) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die festen Flammschutzmittel und gegebenenfalls weiteren Füllstoffe können unmittelbar mit den anderen Rezepturbestandteilen vermischt werden. Bevorzugt ist es jedoch, die festen Flammschutzmittel und gegebenenfalls weiteren Füllstoffe mit flüssigen Rezepturbestandteilen mit geeigneten Vorrichtungen, insbesondere Rührwerken, Dispergatoren oder Mischern, vorzumischen. Besonders bevorzugt ist es, die festen Rezepturbestandteile mit einem Teil oder der gesamten Komponente A vorzumischen.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht.

In geschlossenen Formen kann auch mehr schaumbildendes Reaktionsgemisch verwendet werden, als zur vollständigen Ausfüllung der Form erforderlich ist. Man erhält dann verdichtete Schaumstoffe.

Eine bevorzugte Variante der Schaumstoffherstellung ist die sogenannte Doppeltransportbandtechnologie.

Die nach dem erfindungsgemäßen Verfahren hergestellten Hartschaumstoffe oder Hartformschaumstoffe weisen eine Dichte von 0,02 bis 0,75 g/cm³, vorzugsweise von 0,025 bis 0,24 g/cm³ und insbesondere von 0,03 bis 0,1 g/cm³, auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen.

Die Erfindung wird in den nachfolgenden Ausführungsbeispielen näher erläutert.

### Beispiel 1

Eine Mischung aus
38,1 Gew.-Teilen Polyetheralkohol auf Basis Saccharose/Propylenoxid, OH-Zahl 400 mgKOH/g,
25,0 Gew.-Teilen N,N-bis-(2-hydroxyethyl)aminomethan-phosphonsäure-diethylester,
1,5 Gew.-Teilen Wasser,
2,0 Gew.-Teilen Silikon-Schaumstabilisator, B 8466 der Fa. Goldschmidt,
1,4 Gew.-Teilen N,N,N',N'-Tetramethylhexamethylendiamin,
24,0 Gew.-Teilen Ammoniumpolyphosphat und
8,0 Gew.-Teilen natürlichem Mineralgemisch aus Huntit und Hydromagnesit
wurde mit
5,0 Gew.-Teilen n-Pentan und
90,0 Gew.-Teilen MDI-Rohprodukt, NCO-Gehalt 31,5 %
vermischt.

Der gebildete Schaumstoff hatte folgende Eigenschaften:
Aushärtung: gut, schrumpffrei
Baustoffklasse nach DIN 4102: B2
Flammenhöhe: 11,1 cm

### Beispiel 2

Eine Mischung aus
34,1 Gew.-Teilen Polyetheralkohol auf Basis Saccharose/Propylenoxid, OH-Zahl 400 mgKOH/g,
25,0 Gew.-Teilen N,N-bis-(2-hydroxypropyl)aminomethan-phosphonsäure-diethyl- ester,
1,5 Gew.-Teilen Wasser,
2,0 Gew.-Teilen Silikon-Schaumstabilisator, B 8466 der Fa. Goldschmidt,
1,4 Gew.-Teilen N,N,N',N'-Tetramethylhexamethylendiamin,
27,0 Gew.-Teilen Ammoniumpolyphosphat und
9,0 Gew.-Teilen natürlichem Mineralgemisch aus Huntit und Hydromagnesit
wurde mit
5,0 Gew.-Teilen n-Pentan und
82,0 Gew.-Teilen MDI-Rohprodukt, NCO-Gehalt 31,5 %,
vermischt.

Der gebildete Schaumstoff hatte folgende Eigenschaften:
Aushärtung: gut, schrumpffrei
Baustoffklasse nach DIN 4102: B2
Flammenhöhe: 12,6 cm

### Beispiel 3

Eine Mischung aus
38,1 Gew.-Teilen Polyetheralkohol auf Basis Saccharose/Propylenoxid, OH-Zahl 400 mgKOH/g,
15,0 Gew.-Teilen N,N-bis-(2-hydroxyethyl)aminomethan-phosphonsäure-diethylester,
25,0 Gew.-Teilen Propoxylierte Phosphorsäure, OH-Zahl 450 mgKOH/g,
1,5 Gew.-Teilen Wasser,
2,0 Gew.-Teilen Silikon-Schaumstabilisator, B 8466 der Fa. Goldschmidt,
1,4 Gew.-Teilen N,N,N',N'-Tetramethylhexamethylendiamin,
24,0 Gew.-Teilen Ammoniumpolyphosphat und
8,0 Gew.-Teilen natürlichem Mineralgemisch aus Huntit und Hydromagnesit
wurde mit
5,0 Gew.-Teilen n-Pentan und
90,0 Gew.-Teilen MDI-Rohprodukt, NCO-Gehalt 31,5 %,
vermischt.

Der gebildete Schaumstoff hatte folgende Eigenschaften:
Aushärtung: gut, schrumpffrei
Baustoffklasse nach DIN 4102: B2
Flammenhöhe: 12,4 cm

### Beispiel 4

Eine Mischung aus
25,2 Gew.-Teilen Polyetheralkohol auf Basis Saccharose/Propylenoxid, OH-Zahl 400 mgKOH/g,
25,0 Gew.-Teilen N,N-bis-(2-hydroxyethyl)aminomethan-phosphonsäure-diethylester,
4,2 Gew.-Teilen Glycerol,
1,5 Gew.-Teilen Wasser,
1,5 Gew.-Teilen Silikon-Schaumstabilisator, B 8466 der Fa. Goldschmidt,
1,6 Gew.-Teilen N,N,N',N'-Tetramethylhexamethylendiamin,
2,0 Gew.-Teilen Kaliumacetat (50%) in Ethylenglykol und
39,0 Gew.-Teilen Diammoniumhydrogenphosphat
wurde mit
6,5 Gew.-Teilen n-Pentan und
110,0 Gew.-Teilen MDI-Rohprodukt, NCO-Gehalt 31,5 %,
vermischt.

Der gebildete Schaumstoff hatte folgende Eigenschaften:
Aushärtung: gut, schrumpffrei
Baustoffklasse nach DIN 4102: B2
Flammenhöhe: 10,3 cm

### Beispiel 5

Eine Mischung aus
35,0 Gew.-Teilen Polyetheralkohol auf Basis Saccharose/Propylenoxid, OH-Zahl 400 mgKOH/g,
25,0 Gew.-Teilen N,N-bis-(2-hydroxyethyl)aminomethan-phosphonsäure-diethylester,
0,9 Gew.-Teilen Wasser,
2,0 Gew.-Teilen Silikon-Schaumstabilisator, B 8466 der Fa. Goldschmidt,
1,1 Gew.-Teilen N,N,N',N'-Tetramethylhexamethylendiamin,
27,0 Gew.-Teilen Ammoniumpolyphosphat und
9,0 Gew.-Teilen Bariumborat
wurde mit
6,0 Gew.-Teilen n-Pentan und
80,0 Gew.-Teilen MDI-Rohprodukt, NCO-Gehalt 31,5 %,
vermischt.

Der gebildete Schaumstoff hatte folgende Eigenschaften:
Aushärtung: gut, schrumpffrei
Baustoffklasse nach DIN 4102: B2
Flammenhöhe: 10,1 cm

### Beispiel 6

Eine Mischung aus
35,0 Gew.-Teilen Polyetheralkohol auf Basis Saccharose/Propylenoxid, OH-Zahl 400 mgKOH/g,
25,0 Gew.-Teilen N,N-bis-(2-hydroxyethyl)aminomethan-phosphonsäure-diethylester,
0,9 Gew.-Teilen Wasser,
2,0 Gew.-Teilen Silikon-Schaumstabilisator, B 8466 der Fa. Goldschmidt,
1,1 Gew.-Teilen N,N,N',N'-Tetramethylhexamethylendiamin,
18,0 Gew.-Teilen Melamincyanurat,
8,0 Gew.-Teilen Tris(hydroxyethyl)cyanurat und
10,0 Gew.-Teilen Ammoniumpolyphosphat
wurde mit
6,0 Gew.-Teilen n-Pentan und
80,0 Gew.-Teilen MDI-Rohprodukt, NCO-Gehalt 31,5 %,
vermischt.

Der gebildete Schaumstoff hatte folgende Eigenschaften:
Aushärtung: gut, schrumpffrei
Baustoffklasse nach DIN 4102: B2
Flammenhöhe: 11,3 cm

### Beispiel 7

Eine Mischung aus
38,3 Gew.-Teilen Polyetheralkohol auf Basis Saccharose/Propylenoxid, OH-Zahl 400mgKOH/g,
22,5 Gew.-Teilen N,N-bis-(2-hydroxyethyl)aminomethan-phosphonsäure-diethylester,
2,5 Gew.-Teilen Triethylphosphat,
0,3 Gew.-Teilen Wasser,
2,0 Gew.-Teilen Silikon-Schaumstabilisator, B 8466 der Fa. Goldschmidt,
1,4 Gew.-Teilen N,N,N',N'-Tetramethylhexamethylendiamin,
22,0 Gew.-Teilen Ammoniumpolyphosphat und
11,0 Gew.-Teilen Weizenstärke
wurde mit
5,0 Gew.-Teilen cyclo-Pentan und
90,0 Gew.-Teilen MDI-Rohprodukt, NCO-Gehalt 31,5 %,
vermischt.

Der gebildete Schaumstoff hatte folgende Eigenschaften:
Aushärtung: gut, schrumpffrei
Baustoffklasse nach DIN 4102: B2
Flammenhöhe: 12,8 cm

### Beispiel 8

Eine Mischung aus
38,3 Gew.-Teilen Polyetheralkohol auf Basis Saccharose/Propylenoxid, OH-Zahl 400 mgKOH/g,
12,5 Gew.-Teilen N,N-bis-(2-hydroxyethyl)aminomethan-phosphonsäure-diethylester,
10,0 Gew.-Teilen N,N',N''-Tris(2-hydroxypropyl)melamin,
2,5 Gew.-Teilen Triethylphosphat,
0,3 Gew.-Teilen Wasser,
2,0 Gew.-Teilen Silikon-Schaumstabilisator, B 8466 der Fa. Goldschmidt,
1,4 Gew.-Teilen N,N,N',N'-Tetramethylhexamethylendiamin,
22,0 Gew.-Teilen Ammoniumpolyphosphat und
11,0 Gew.-Teilen Weizenstärke
wurde mit
5,0 Gew.-Teilen cyclo-Pentan und
90,0 Gew.-Teilen MDI-Rohprodukt, NCO-Gehalt 31,5 %,
vermischt.

Der gebildete Schaumstoff hatte folgende Eigenschaften:
Aushärtung: gut, schrumpffrei
Baustoffklasse nach DIN 4102: B2
Flammenhöhe: 13,2 cm

### Beispiel 9

Eine Mischung aus
38,3 Gew.-Teilen Polyetheralkohol auf Basis Saccharose/Propylenoxid, OH-Zahl 400 mgKOH/g,
22,5 Gew.-Teilen N,N-bis-(2-hydroxyethyl)aminomethan-phosphonsäure-diethylester,
2,5 Gew.-Teilen Diethylethylphosphonat,
0,3 Gew.-Teilen Wasser,
2,0 Gew.-Teilen Silikon-Schaumstabilisator, B 8466 der Fa. Goldschmidt,
1,4 Gew.-Teilen N,N,N',N'-Tetramethylhexamethylendiamin,
22,0 Gew.-Teilen Ammoniumpolyphosphat und
11,0 Gew.-Teilen Weizenstärke
wurde mit
5,0 Gew.-Teilen cyclo-Pentan und
90,0 Gew.-Teilen MDI-Rohprodukt, NCO-Gehalt 31,5 %,
vermischt.

Der gebildete Schaumstoff hatte folgende Eigenschaften:
Aushärtung: gut, schrumpffrei
Baustoffklasse nach DIN 4102: B2
Flammenhöhe: 11,9 cm

### Beispiel 10 (Vergleich)

Eine Mischung aus
48,3 Gew.-Teilen Polyetheralkohol auf Basis Saccharose/Propylenoxid, OH-Zahl 400 mgKOH/g,
5,6 Gew.-Teilen Glycerol,
9,4 Gew.-Teilen Diethylethylphosphonat,
0,3 Gew.-Teilen Wasser,
2,0 Gew.-Teilen Silikon-Schaumstabilisator, B 8466 der Fa. Goldschmidt,
1,4 Gew.-Teilen N,N,N',N'-Tetramethylhexamethylendiamin,
22,0 Gew.-Teilen Ammoniumpolyphosphat und
11,0 Gew.-Teilen Weizenstärke
wurde mit
5,0 Gew.-Teilen cyclo-Pentan und
90,0 Gew.-Teilen MDI-Rohprodukt, NCO-Gehalt 31,5 %,
vermischt.

Der gebildete Schaumstoff hatte folgende Eigenschaften:
Aushärtung: verzögert, schrumpft leicht
Baustoffklasse nach DIN 4102: B3
Flammenhöhe: 17,9 cm

### Beispiel 11 (Vergleich)

Eine Mischung aus
56,5 Gew.-Teilen Polyetheralkohol auf Basis Saccharose/Propylenoxid, OH-Zahl 400 mgKOH/g,
27,5 Gew.-Teilen N,N-bis-(2-hydroxyethyl)aminomethan-phosphonsäure-diethylester,
10,0 Gew.-Teilen Diethylethylphosphonat,
2,0 Gew.-Teilen Wasser,
2,0 Gew.-Teilen Silikon-Schaumstabilisator, B 8466 der Fa. Goldschmidt, und
2,0 Gew.-Teilen N,N,N',N'-Tetramethylhexamethylendiamin
wurde mit
6,0 Gew.-Teilen cyclo-Pentan und
120,0 Gew.-Teilen MDI-Rohprodukt, NCO-Gehalt 31,5 %,
vermischt.

Der gebildete Schaumstoff hatte folgende Eigenschaften:
Aushärtung: gut, schrumpffrei
Baustoffklasse nach DIN 4102: B3
Flammenhöhe: >19 cm

## Patentansprüche

1. Verfahren zur Herstellung von flammgeschützten Hartschaumstoffen auf Isocyanatbasis, insbesondere Polyurethan- und Polyisocyanurathartschäumen, durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren
f) Flammschutzmitteln sowie gegebenenfalls
g) weiteren Hilfsmitteln und/oder Zusatzstoffen,
dadurch gekennzeichnet, daß als Flammschutzmittel eine halogenfreie Kombination aus mindestens einem flüssigen, gegenüber Isocyanaten reaktiven Flammschutzmittel und aus mindestens einem festen Flammschutzmittel im Verhältnis 5:1 bis 1:5 eingesetzt wird und der Gehalt der Flammschutzmittelkombination, bezogen auf den Schaumstoff, 10 bis 45 Gew.-% beträgt.

2. Verfahren nach Anspruch 1, dadurch gekennzeichnet, daß die flüssigen, gegenüber Isocyanaten reaktiven Flammschutzmittel Verbindungen mit mindestens einem gegenüber Isocyanaten reaktiven Wasserstofftom sind, die eine oder mehrere reaktive Gruppen, ausgewählt aus OH-Gruppen, SH-Gruppen, NH-Gruppen, NH₂-Gruppen und CH-aciden Gruppen, im Molekül tragen.

3. Verfahren nach Anspruch 1 oder 2, dadurch gekennzeichnet, daß die flüssigen, gegenüber Isocyanaten reaktiven Flammschutzmittel Phosphor- und/oder Stickstoffverbindungen sind.

4. Verfahren nach einem der Ansprüche 1 bis 3, dadurch gekennzeichnet, daß die flüssigen, gegenüber Isocyanaten reaktiven Flammschutzmittel aminomethylierte Phosphonsäureester sind.

5. Verfahren nach einem der Ansprüche 1 bis 4, dadurch gekennzeichnet, daß das Verhältnis der flüssigen, gegenüber Isocyanaten reaktiven Flammschutzmittel zu den festen Flammschutzmitteln 2:1 bis 1:2 beträgt.

6. Verfahren nach einem der Ansprüche 1 bis 5, dadurch gekennzeichnet, daß der Gehalt der Kombination aus flüssigen, gegenüber Isocyanaten reaktiven Flammschutzmitteln und festen Flammschutzmitteln, bezogen auf den Schaumstoff, 20 bis 35 Gew.-% beträgt.

7. Verfahren nach einem der Ansprüche 1 bis 6, dadurch gekennzeichnet, daß neben der Kombination aus flüssigen, gegenüber Isocyanaten reaktiven Flammschutzmitteln und festen Flammschutzmitteln flüssige, nichtreaktive Flammschutzmittel mitverwendet werden.

8. Verfahren nach einem der Ansprüche 1 bis 7, dadurch gekennzeichnet, daß der Gehalt der mitverwendeten flüssigen, nichtreaktiven Flammschutzmittel, bezogen auf das Gesamtsystem, höchstens 3 Gew.-% beträgt.

## Claims

1. A process for the production of flameproofed, rigid, isocyanate-based foams, in particular rigid polyurethane and polyisocyanurate foams, by reacting
a) organic and/or modified organic polyisocyanates with
b) at least one relatively high-molecular-weight compound containing at least two reactive hydrogen atoms, and, if desired,
c) low-molecular-weight chain extenders and/or crosslinking agents
in the presence of
d) blowing agents,
e) catalysts,
f) flameproofing agents, and, if desired,
g) further auxiliaries and/or additives,
wherein the flameproofing agent is a halogen-free combination of at least one liquid flameproofing agent which is reactive toward isocyanates and at least one solid flameproofing agent in a ratio of from 5:1 to 1:5, and the content of the flameproofing agent combination is from 10 to 45% by weight, based on the foam.

2. A process as claimed in claim 1, wherein the liquid flameproofing agent which is reactive toward isocyanates is a compound which contains at least one hydrogen atom which is reactive toward isocyanates and carries one or more reactive groups selected from OH groups, SH groups, NH groups, NH₂ groups and CH-acidic groups in the molecule.

3. A process as claimed in claim 1 or 2, wherein the liquid flameproofing agent which is reactive toward isocyanates is a phosphorus and/or nitrogen compound.

4. A process as claimed in any of claims 1 to 3, wherein the liquid flameproofing agent which is reactive toward isocyanates is an aminomethylated phosphonic acid ester.

5. A process as claimed in any of claims 1 to 4, wherein the ratio between the liquid flameproofing agent which is reactive toward isocyanates and the solid flameproofing agent is from 2:1 to 1:2.

6. A process as claimed in any of claims 1 to 5, wherein the content of the combination of liquid flameproofing agent which is reactive toward isocyanates and solid flameproofing agent is from 20 to 35% by weight, based on the foam.

7. A process as claimed in any of claims 1 to 6, wherein an unreactive liquid flameproofing agent is used in addition to the combination of liquid flameproofing agent which is reactive toward isocyanates and solid flameproofing agent.

8. A process as claimed in any of claims 1 to 7, wherein the content of the additional liquid, unreactive flameproofing agent is at most 3% by weight, based on the total system.

## Revendications

1. Procédé pour la préparation de mousses dures ignifuges à base d'isocyanates, en particulier de mousses dures de polyuréthanes et de polyisocyanurates, par mise en réaction de
a) des polyisocyanates organiques et/ou organiques modifiés avec
b) au moins un composé à poids moléculaire élevé contenant au moins deux atomes d'hydrogène réactifs, et le cas échéant
c) des agents d'allongement de chaînes et/ou des agents de réticulation à bas poids moléculaires,
en présence de
d) des agents moussants,
e) des catalyseurs,
f) des agents ignifuges, et le cas échéant
g) d'autres adjuvants et/ou additifs,
caractérisé en ce qu'on met en oeuvre, à titre d'agent ignifuge, une combinaison exempte d'atomes d'halogène d'au moins un agent ignifuge sous forme liquide réactif vis-à-vis d'isocyanates et d'au moins un agent ignifuge sous forme solide dans le rapport 5:1 à 1:5, la teneur de la combinaison des agents ignifuges, rapportée à la mousse, s'élevant de 10 à 45% en poids.

2. Procédé selon la revendication 1, caractérisé en ce que les agents ignifuges sous forme liquide réactifs vis-à-vis d'isocyanates sont des composés contenant au moins un atome d'hydrogène réactif vis-à-vis d'isocyanates, qui portent dans la molécule, un ou plusieurs groupes réactifs choisis parmi le groupe comprenant des groupes OH, des groupes SH, des groupes NH, des groupes NH₂ et des groupes CH-acides.

3. Procédé selon la revendication 1 ou 2, caractérisé en ce que les agents ignifuges sous forme liquide réactifs vis-à-vis d'isocyanates sont des composés phosphorés et/ou azotés.

4. Procédé selon l'une quelconque des revendications 1 à 3, caractérisé en ce que les agents ignifuges sous forme liquide réactifs vis-à-vis d'isocyanates sont des esters phosphoniques aminométhylés.

5. Procédé selon l'une quelconque des revendications 1 à 4, caractérisé en ce que le rapport des agents ignifuges sous forme liquide réactifs vis-à-vis d'isocyanates aux agents ignifuges sous forme solide s'élève de 2:1 à 1:2.

6. Procédé selon l'une quelconque des revendications 1 à 5, caractérisé en ce que la teneur de la combinaison des agents ignifuges sous forme liquide réactifs vis-à-vis d'isocyanates et des agents ignifuges sous forme solide, rapportée à la mousse, s'élève de 20 à 35% en poids.

7. Procédé selon l'une quelconque des revendications 1 à 6, caractérisé en ce qu'en plus de la combinaison des agents ignifuges sous forme liquide réactifs vis-à-vis d'isocyanates et des agents ignifuges sous forme solide, on utilise de manière conjointe des agents ignifuges sous forme liquide non réactifs.

8. Procédé selon l'une quelconque des revendications 1 à 7, caractérisé en ce que la teneur maximale des agents ignifuges sous forme liquide non réactifs utilisés de manière conjointe, rapportée au système total, s'élève à 3% en poids.
